(19) Europäisches Patentamt
European Patent Office
Office européen des brevets

(11) Veröffentlichungsnummer: **0 614 947 A1**

# (12) EUROPÄISCHE PATENTANMELDUNG

(21) Anmeldenummer: **94103418.3**

(22) Anmeldetag: **07.03.94**

(51) Int. Cl.[5]: **C09B 62/515**, C09B 62/44, C09B 67/22, C09B 67/44, //C09B67/26

(30) Priorität: **12.03.93 DE 4307802**

(43) Veröffentlichungstag der Anmeldung: **14.09.94 Patentblatt 94/37**

(84) Benannte Vertragsstaaten: **BE CH DE FR GB IT LI**

(71) Anmelder: **HOECHST AKTIENGESELLSCHAFT**
**Brüningstrasse 50**
**D-65929 Frankfurt am Main (DE)**

(72) Erfinder: **Hussong, Kurt, Dr.**
**Gluckstrasse 19**
**D-65812 Bad Soden/Ts. (DE)**
Erfinder: **Russ, Werner Hubert, Dr.**
**Wingertstrasse 8a**
**D-65439 Flörsheim/Main (DE)**
Erfinder: **Schidlo, Wolfram, Dr.**
**Nelkenweg 14**
**D-65719 Hofheim/Ts. (DE)**

(54) **Wasserlösliche Kupferkomplex-Monoazo-naphtholcarbonsäure-Verbindungen, Verfahren zu ihrer Herstellung und ihre Verwendung als Farbstoffe.**

(57) Es werden wasserlösliche Kupferkomplex-Monoazoverbindungen der allgemeinen Formel (1)

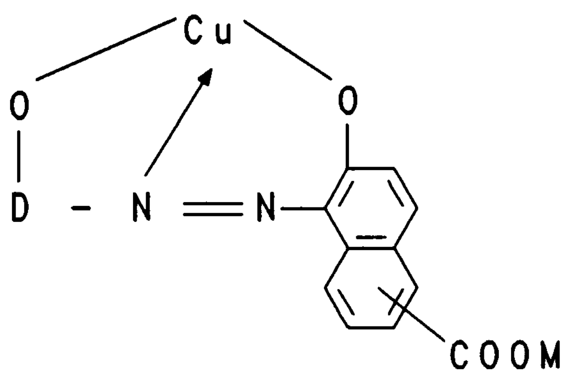

(1)

beschrieben, in welcher M Wasserstoff oder ein Alkalimetall ist, D eine Gruppe der allgemeinen Formel (2a), (2b) oder (2c)

EP 0 614 947 A1

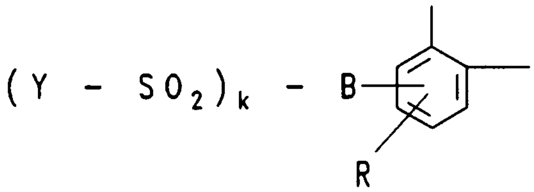

(2a)

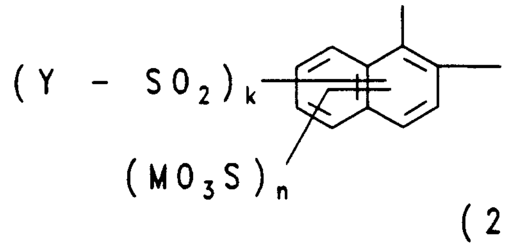

(2b)

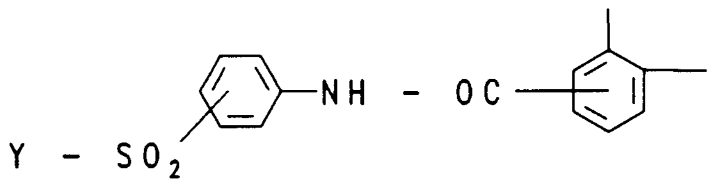

(2c)

bedeutet, in welcher R Wasserstoff, gegebenenfalls durch Sulfo, Carboxy oder Sulfato substituiertes niederes Alkyl, gegebenenfalls durch Sulfo, Carboxy oder Sulfato substituiertes niederes Alkoxy, Sulfo, Halogen oder eine Gruppe der allgemeinen Formel (3a)

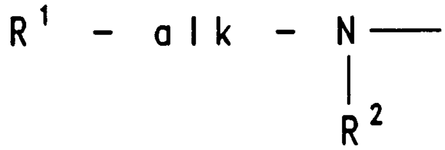

(3a)

bedeutet, worin alk $C_2$-$C_4$-Alkylen ist, $R^1$ Sulfo, Carboxy, Sulfato oder Phosphato und $R^2$ Wasserstoff, Methyl oder Ethyl ist,
und in welchen die Gruppe Y-$SO_2$- für den faserreaktiven Rest der Vinylsulfonreihe steht, k die Zahl 1 oder 2 ist, n die Zahl Null oder 1 ist und B eine direkte Bindung oder eine Gruppe der Formel (3b)

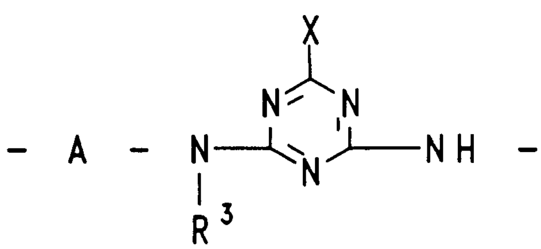

(3b)

bedeutet, worin A $C_2$-$C_4$-Alkylen oder gegebenenfalls substituiertes Arylen ist, $R^3$ Wasserstoff oder Alkyl bedeutet und X Halogen, Cyanoamino oder Hydroxy ist.
Nach den für faserreaktive Farbstoffe üblichen Anwendungsverfahren liefern die Verbindungen (1) auf hydroxy- und/oder carbonamidgruppenhaltigem Material, wie Cellulosefasern, Wolle und synthetischem Polyamid, farbstarke Färbungen und Drucke von vorwiegend roter bis rotstichig violetter Nuance.

Die Erfindung liegt auf dem technischen Gebiet der faserreaktiven Farbstoffe.

Metallfreie faserreaktive Azofarbstoffe, die in der Diazokomponente eine faserreaktive Gruppe der Vinylsulfonreihe besitzen und die als Kupplungskomponente die 2-Naphthol-6-sulfonsäure, 2-Naphthol-3-carbonsäure oder 2-Naphthol-6-carbonsäure enthalten, sind aus dem Beispiel 4 der deutschen Patentschrift Nr. 960 534, aus dem Beispiel 43 der deutschen Patentschrift Nr. 965 902 und aus der US-Patentschrift Nr. 5 093 483 bekannt.

Mit der vorliegenden Erfindung wurden nunmehr neue wasserlösliche Kupferkomplex-Monoazoverbindungen der allgemeinen Formel (1)

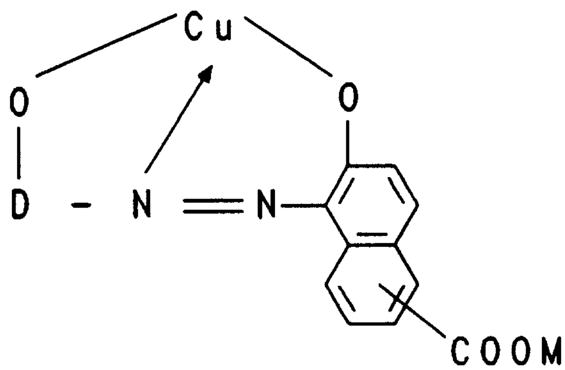

(1)

gefunden, worin bedeuten:

M ist ein Wasserstoffatom oder ein Alkalimetall, wie Natrium, Kalium oder Lithium;

D ist eine Gruppe der allgemeinen Formel (2a), (2b) oder (2c)

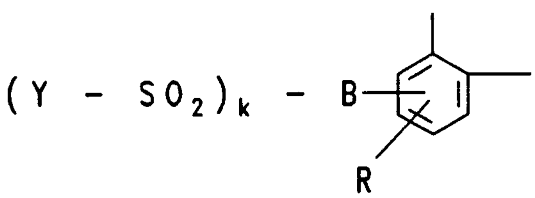

(2a)

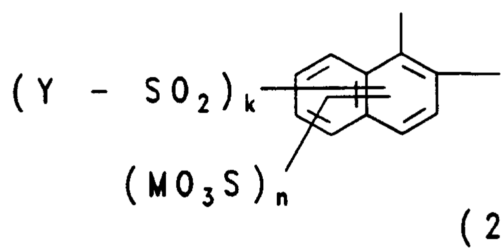

(2b)

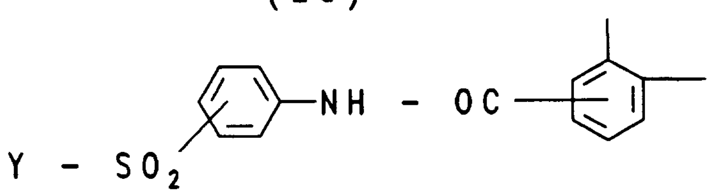

(2c)

in welchen

R Wasserstoff, Alkyl von 1 bis 4 C-Atomen, durch Sulfo, Carboxy oder Sulfato substituiertes Alkyl von 1 bis 4 C-Atomen, Alkoxy von 1 bis 4 C-Atomen, durch Sulfo, Carboxy oder Sulfato substituiertes Alkoxy von 1 bis 4 C-Atomen, Sulfo, Halogen, wie Brom oder Chlor, oder eine Gruppe der allgemeinen Formel (3a)

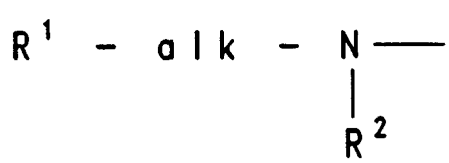

(3a)

ist, in welcher

- alk Alkylen von 2 bis 4 C-Atomen, bevorzugt Ethylen, ist,
- $R^1$ Sulfo, Carboxy, Sulfato oder Phosphato und
- $R^2$ Wasserstoff, Methyl oder Ethyl ist,
- Y für Vinyl steht oder Ethyl ist, das in β-Stellung einen durch Alkali unter Bildung der Vinylgruppe eliminierbaren Substituenten enthält,
- k die Zahl 1 oder 2, bevorzugt 1, bedeutet,
- n für die Zahl Null oder 1 steht (wobei im Falle n gleich Null diese Gruppe Wasserstoff bedeutet),
- M eine der oben genannten Bedeutungen besitzt, und
- B eine direkte Bindung ist oder eine bivalente Gruppe der allgemeinen Formel (3b)

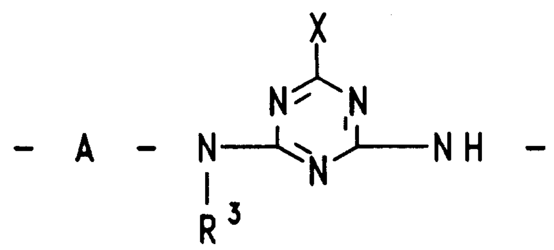

(3b)

bedeutet, in welcher

- A Alkylen von 2 bis 4 C-Atomen, bevorzugt Propylen, oder gegebenenfalls substituiertes Arylen, wie Phenylen, Naphthylen, durch 1 oder 2 Substituenten aus der Gruppe Methoxy, Ethoxy, Methyl, Sulfo und Carboxy substituiertes Phenylen oder durch 1 oder 2 Sulfogruppen substituiertes Naphthylen, bevorzugt gegebenenfalls substituiertes Phenylen, ist,
- $R^3$ Wasserstoff oder Alkyl von 1 bis 4 C-Atomen, bevorzugt Methyl, ist und
- X Halogen, wie Chlor oder Fluor, Cyanoamino oder Hydroxy bedeutet;

in Formel (2b) steht die Oxigruppe in 2-Stellung oder bevorzugt in 1-Stellung und die Azogruppe in 1-Stellung bzw. bevorzugt in 2-Stellung an den Naphthalinrest gebunden.

Die Carboxygruppe -COOM steht bevorzugt in 5-Stellung und insbesondere bevorzugt in 6-Stellung an den 2-Naphtholrest gebunden.

Sulfogruppen sind Gruppen entsprechend der allgemeinen Formel $-SO_3M$ , Carboxygruppen sind Gruppen entsprechend der allgemeinen Formel -COOM , Sulfatogruppen sind Gruppen entsprechend der allgemeinen Formel $-OSO_3M$ , Thiosulfatogruppen sind Gruppen entsprechend der allgemeinen Formel $-S-SO_3M$ und Phosphatogruppen sind Gruppen entsprechend der allgemeinen Formel $-OPO_3M_2$ , wobei M die obengenannte Bedeutung hat.

Bevorzugt von den Alkoxygruppen sind die Ethoxygruppe und insbesondere die Methoxygruppe. Bevorzugt von den Alkylgruppen sind die Ethylgruppe und insbesondere die Methylgruppe.

Von den für R genannten, durch eine wasserlöslich machende Gruppe substituierten Alkoxy- und Alkylaminogruppen sind beispielsweise die β-Sulfatoethylamino-, die N-Methyl-N-(β-sulfatoethyl)-amino- und die β-Sulfatoethoxy-Gruppe als bevorzugt hervorzuheben.
Bevorzugt ist R Wasserstoff, Sulfo oder Methoxy. Bevorzugt steht die Gruppe $Y-SO_2-$ im Formelrest (2a) in meta- oder para-Stellung zu der zur Azogruppe führenden Bindung. Bevorzugt steht die Gruppe $Y-SO_2-$ im Formelrest (2b) in 6- oder 8-Stellung, falls die freie Bindung zur Azogruppe sich in 2-Stellung befindet; bevorzugt befindet sich die Azogruppe in 2-Stellung.

Insbesondere können diejenigen erfindungsgemäßen Verbindungen hervorgehoben werden, in denen D für den 3- oder 4-(β-Sulfatoethylsulfonyl)-phen-1,2-ylen-, den 4-(β-Thiosulfatoethylsulfonyl)-phen-1,2-ylen-, den 2-Sulfo-5-(β-sulfatoethylsulfonyl)-phen-1,2-ylen-, den 8-(β-Sulfatoethylsulfonyl)-6-sulfonaphth-1,2-ylen- oder den 6-(β-Sulfatoethylsulfonyl)-8-sulfo-naphth-1,2-ylen-Rest steht, wobei in den angegebenen Resten die 1-Stellung mit der Oxigruppe und die 2-Stellung mit der Azogruppe verbunden ist.

Substituenten, die gemäß dem Formelglied Y in β-Stellung der Ethylgruppe gebunden sind und durch Alkali unter Bildung der Vinylgruppe eliminiert werden können, sind beispielsweise: Alkanoyloxy von 2 bis 5 C-Atomen, wie Acetyloxy, gegebenenfalls substituiertes Aroyloxy, wie Benzoyloxy, Sulfobenzoyloxy oder Carboxybenzoyloxy, Dialkylamino mit Alkylgruppen von 1 bis 4 C-Atomen, wie insbesondere Dimethylamino und Diethylamino, Trialkylammonium mit Alkylgruppen von 1 bis 4 C-Atomen, wie Trimethylammonium, Chlor, Brom, Alkylsulfonyloxy mit Alkylgruppen von 1 bis 4 C-Atomen, Phenylsulfonyloxy, Sulfophenylsulfonyloxy, Toluylsulfonyloxy, Phosphato, Thiosulfato oder Sulfato.

Bevorzugt steht Y für Vinyl und $\beta$-Phosphatoethyl, insbesondere bevorzugt für $\beta$-Thiosulfatoethyl und ganz besonders bevorzugt für $\beta$-Sulfatoethyl.

Die vorliegende Erfindung betrifft weiterhin Verfahren zur Herstellung der Verbindungen der allgemeinen Formel (1). Diese sind dadurch gekennzeichnet, daß man eine Verbindung der allgemeinen Formel (4)

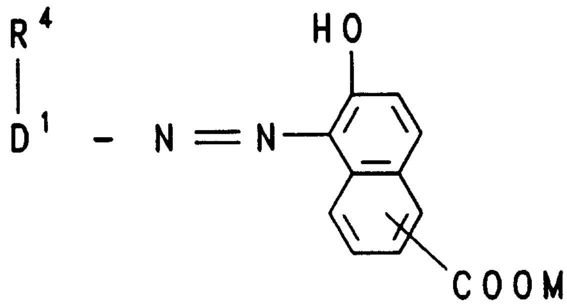

(4)

in welcher

M die obengenannte Bedeutung hat,

$D^1$ einen Rest der allgemeinen Formel (5a), (5b) oder (5c)

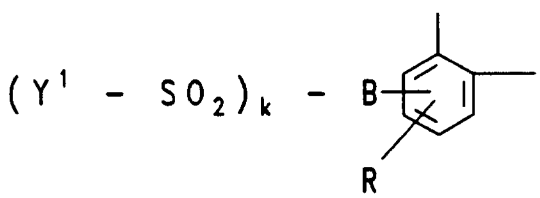

(5a)

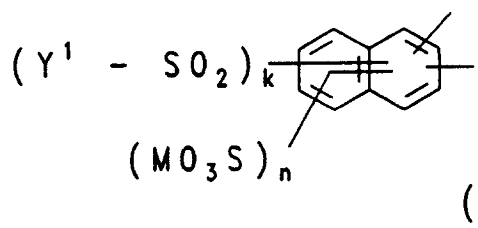

(5b)

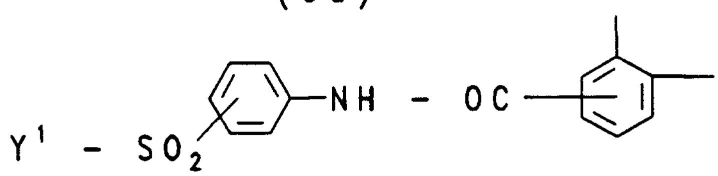

(5c)

bedeutet, in welchen B, R, M, k und n die obengenannten Bedeutungen haben und $Y^1$ eine der für Y genannten Bedeutungen besitzt oder $\beta$-Hydroxyethyl ist, und $R^4$ für Wasserstoff, Hydroxy oder Methoxy steht, wobei in Formel (5b) die eine freie Bindung, die zur Azogruppe führt, in ortho-Stellung zur anderen freien, zu $R^4$ führenden Bindung steht und $R^4$ bevorzugt in $\alpha$-Stellung an den Naphthalinrest gebunden ist, mit einer ein Kupferion abgebenden Verbindung, wie beispielsweise Kupfer(II)chlorid oder Kupfersulfat, analog bekannten Verfahrensweisen, bevorzugt in wäßrigem Medium, umsetzt, wobei man im Falle von $R^4$ gleich Hydroxy die Umsetzung bei einer Temperatur zwischen 0 und 40 °C durchführt, im Falle von $R^4$ gleich Wasserstoff in Gegenwart eines oxidierend wirkenden Mittels, wie Wasserstoffperoxid, bei einer Temperatur zwischen 10 und 60 °C, bevorzugt zwischen 25 und 50 °C, und im Falle von $R^4$ gleich Methoxy die Umsetzung bei einer Temperatur zwischen 80 und 120 °C durchführt, wobei in allen Fällen die Umsetzung innerhalb eines pH-Bereiches zwischen 4 und 7 erfolgt, und daß man im Falle, daß $Y^1$ $\beta$-Hydroxyethyl bedeutet, die gebildete Kupferkomplex-Azoverbindung mit der $\beta$-Hydroxyethylsulfonyl-Gruppe mit Hilfe eines üblichen Acylierungs- oder Veresterungsmittels in eine Kupferkomplex-Azoverbindung der allgemeinen Formel (1) mit Y gleich einer Ethylgruppe, die in $\beta$-Stellung einen anorganischen oder organischen Esterrest enthält, überführt.

Anorganische oder organische Esterreste sind insbesondere die bereits oben erwähnten Sulfato-, Phosphato-, Alkanoyloxy-, Benzoyloxy-, Alkylsulfonyloxy-, Phenylsulfonyloxy-, Sulfonphenylsulfonyloxy- und Toluylsulfonyloxy-Gruppen.

So können erfindungsgemäße Kupferkomplex-Azoverbindungen mit Y gleich einer $\beta$-Sulfatoethyl- oder $\beta$-Phosphatoethyl-Gruppe in erfindungsgemäßer Weise hergestellt werden, indem man die erhaltene Kupferkomplex-Azoverbindung, die der allgemeinen Formel (1) entspricht, in welcher jedoch Y für die $\beta$-

Hydroxyethyl-Gruppe steht, analog bekannten Verfahrensweisen mit einem Sulfatisierungs- bzw. Phosphatisierungsmittel umsetzt.

Sulfatisierungsmittel sind bekannt; sie sind beispielsweise Chlorsulfonsäure, konzentrierte Schwefelsäure, Schwefelsäuremonohydrat und Schwefeltrioxid enthaltende Schwefelsäure. Vorzugsweise erfolgt die Sulfatierung mittels konzentrierter Schwefelsäure bei einer Temperatur zwischen 0 und 40 °C oder mittels Schwefelsäuremonohydrat bei einer Temperatur zwischen 5 und 15 °C.

Phosphatierungsmittel sind ebenfalls bekannt; sie sind Phosphorsäure, Polyphosphorsäure, Phosphoroxychlorid oder Gemische dieser Säuren mit Phosphorpentoxid. Die Phosphatierungsreaktion mit diesen Agentien erfolgt in der Regel zwischen 20 und 80 °C.

Erfindungsgemäße Kupferkomplex-Azoverbindungen mit Y gleich einer Alkanoyloxygruppe können in gleicher Weise durch Umsetzung einer entsprechenden Kupferkomplex-Azo-Ausgangsverbindung, die der Formel (1) entspricht, jedoch den $\beta$-Hydroxyethylsulfonyl-Rest enthält, mit einem Acylierungsmittel einer Alkancarbonsäure oder aromatischen Carbonsäure, wie beispielsweise Acetylchlorid, Eisessig, Acetanhydrid, Benzoylchlorid, hergestellt werden.

Verbindungen der allgemeinen Formel (1), in welchen Y $\beta$-Thiosulfatoethyl bedeutet, können bevorzugt auch in der Weise hergestellt werden, daß man eine Verbindung der allgemeinen Formel (1), in welcher Y für $\beta$-Sulfatoethyl steht, zunächst im stark alkalischen Bereich, wie bei einem pH-Wert zwischen 10 und 13, und bei einer Temperatur zwischen 35 und 50 °C in die erfindungsgemäße Vinylsulfonyl-Verbindung überführt, die Lösung sodann auf einen pH-Wert zwischen 4 und 6 einstellt und die Vinylsulfonyl-Verbindung mit Natriumthiosulfat zur $\beta$-Thiosulfatoethylsulfonyl-Verbindung der allgemeinen Formel (1) umsetzt.

Die Ausgangs-Azoverbindungen der allgemeinen Formel (4) werden in üblicher Weise der Synthese von Azoverbindungen hergestellt, so durch Kupplung des Diazoniumsalzes eines aromatischen Amins der allgemeinen Formel (6a), (6b) oder (6c)

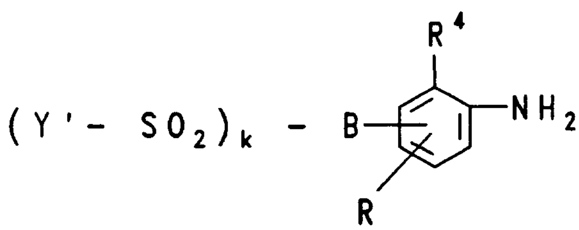

(6a)

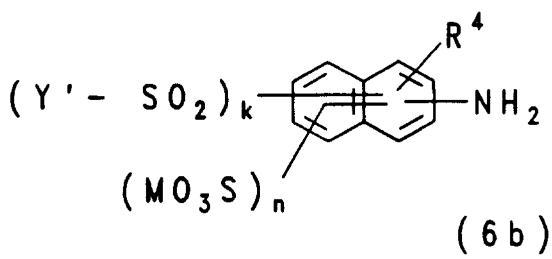

(6b)

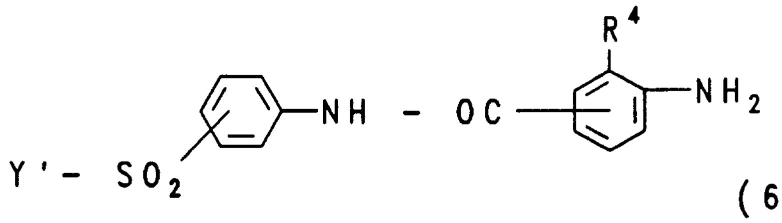

(6c)

in welcher Y', R, B, $R^4$, M, k und n die obengenannten Bedeutungen haben und in Formel (6b) die Gruppe $R^4$ in $\alpha$- oder $\beta$-Stellung an den Naphthalinring gebunden ist und die Aminogruppe -$NH_2$ ortho-ständig zu $R^4$ steht, mit einer Verbindung der allgemeinen Formel (7)

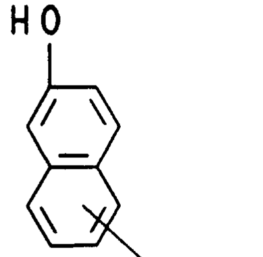

(7)

in welcher M die obengenannte Bedeutung besitzt, bei einem pH-Wert zwischen 3 und 7 und einer Temperatur zwischen 5 und 30 ° C.

Die vorliegende Erfindung betrifft weiterhin Gemische von Kupferkomplex-Monoazoverbindungen der allgemeinen Formel (1), in welchen D und M und die Stellung der Gruppe -COOM gleiche Bedeutungen haben, Y jedoch in der einen Verbindung der allgemeinen Formel (1) für β-Thiosulfatoethyl oder bevorzugt β-Sulfatoethyl und in der anderen Verbindung der allgemeinen Formel (1) für Vinyl steht. In solchen Gemischen beträgt der Anteil der Verbindung der allgemeinen Formel (1) mit Y gleich Vinyl bevorzugt bis zu 30 Mol-%, insbesondere zwischen 5 und 25 Mol-%, bezogen auf das Gemisch aus den Vinylsulfonyl- und β-Thiosulfatoethylsulfonyl-Verbindungen oder Vinylsulfonyl- und β-Sulfatoethylsulfonyl-Verbindungen.

Die erfindungsgemäßen Farbstoffmischungen können als Präparation in fester oder in flüssiger (gelöster) Form vorliegen. In fester Form können sie im allgemeinen die bei wasserlöslichen und insbesondere faserreaktiven Farbstoffen üblichen Elektrolytsalze, wie Natriumchlorid, Kaliumchlorid, Lithiumsulfat und Natriumsulfat, und desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat und Dinatriumhydrogenphosphat, geringe Mengen an Sikkativen oder, falls sie in flüssiger, wäßriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Im allgemeinen liegen die Farbstoffmischungen als Farbstoffpulver mit einem Gehalt von 10 bis 80 Gew.-%, bezogen auf das Farbstoffpulver bzw. die Präparation, an einem Elektrolytsalz, das auch als Stellmittel bezeichnet wird, vor. Diese Farbstoffpulver können zudem die erwähnten Puffersubstanzen in einer Gesamtmenge von bis zu 5 %, bezogen auf das Farbstoffpulver enthalten. Sofern die erfindungsgemäßen Farbstoffmischungen in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Die Ausgangsverbindungen der allgemeinen Formeln (6) sind bekannt und in der Literatur zahlreich beschrieben. Ebenso sind die als Ausgangsprodukte dienenden 2-Naphthol-carbonsäuren, wie 2-Naphthol-6-carbonsäure und 2-Naphthol-5-carbonsäure, bekannt.

Aromatische Amine der allgemeinen Formeln (6) sind beispielsweise 4-(β-Sulfatoethylsulfonyl)-anilin, 2-Sulfo-4-(β-sulfatoethylsulfonyl)-anilin, 3-(β-Sulfatoethylsulfonyl)-anilin, 2-Sulfo-5-(β-sulfatoethylsulfonyl)-anilin, 2-Hydroxy-5-(β-sulfatoethylsulfonyl)-anilin, 2-Hydroxy-4-(β-sulfatoethylsulfonyl)-anilin, 4-Methoxy-3-(β-sulfatoethylsulfonyl)-anilin, 3-Methoxy-4-(β-sulfatoethylsulfonyl)-anilin, 2-Methoxy-5-(β-sulfatoethylsulfonyl)-anilin, 2-Methoxy-4-(β-sulfatoethylsulfonyl)-anilin, 4-Methyl-3-(β-sulfatoethylsulfonyl)-anilin, 2-(β-Sulfatoethylsulfonyl)-anilin, 5-Methyl-2-methoxy-4-(β-sulfatoethylsulfonyl)-anilin, 2,5-Dimethoxy-4-(β-sulfatoethylsulfonyl)-anilin, 4-Amino-3'-(β-sulfatoethylsulfonyl)-benzoesäureanilid, 4-(β-Sulfatoethylamino)-3-(β-sulfatoethylsulfonyl)-anilin, 4-(β-Sulfatoethoxy)-3-(β-sulfatoethylsulfonyl)-anilin, 6-(β-Sulfatoethylsulfonyl)-2-amino-naphthalin, 8-Sulfo-6-(β-sulfatoethylsulfonyl)-2-amino-naphthalin, 1-Sulfo-6-(β-sulfatoethylsulfonyl)-2-amino-naphthalin, 6-Sufo-8-(β-sulfatoethylsulfonyl)-2-amino-naphthalin, 8-(β-Sulfatoethylsulfonyl)-2-amino-naphthalin, 7-(β-Sulfatoethylsulfonyl)-2-amino-naphthalin, 5-(β-Sulfatoethylsulfonyl)-2-amino-naphthalin, 7-Sulfo-5-(β-sulfatoethylsulfonyl)-2-amino-naphthalin, 5-Sulfo-7-(β-sulfatoethylsulfonyl)-2-amino-naphthalin, 2,5-Bis-(β-sulfatoethylsulfonyl)-anilin, 3,4-Bis-(β-sulfatoethylsulfonyl)-anilin, 4-{4'-[γ-(β'-Sulfatoethylsulfonyl)-propyl]-amino-6'-fluor-1',3',5'-triazin-2'-yl}-amino-anilin, 2-Sulfo-5-{4'-[γ-(β'-sulfatoethylsulfonyl)-propyl]-amino-6'-fluor-1',3',5'-triazin-2'-yl}-amino-anilin' 4-{4'-[4''-(β-Sulfatoethylsulfonyl)-phenyl]-amino-6'-cyanoamino-1',3',5'-triazin-2'-yl}-amino-anilin, 4-{4'-[3''-(β-Sulfatoethylsulfonyl)-phenyl]-amino-6'-cyanoamino-1',3',5'-triazin-2'-yl}-amino-anilin, 2-Sulfo-5-{4'-[4''-(β-sulfatoethylsulfonyl)-phenyl]-amino-6'-cyanoamino-1',3',5'-triazin-2'-yl}-amino-anilin, 2-Sulfo-5-{4'-[3''-(β-sulfatoethylsulfonyl)-phenyl]-amino-6'-cyanoamino-1',3',5'-triazin-2'-yl}-amino-anilin, 2-Sulfo-4-{4'-[4''-(β-sulfatoethylsulfonyl)-phenyl]-amino-6'-cyanoamino-1',3',5'-triazin-2'-yl}-amino-anilin, 2-Sulfo-4-{4'-[3''-(β-sulfatoethylsulfonyl)-phenyl]-amino-6'-cyanoamino-1',3',5'-triazin-2'-yl}-amino-anilin, 4-{4'-[4''-(β-Sulfatoethylsulfonyl)-phenyl]-amino-6'-chlor-1',3',5'-triazin-2'-yl}-amino-anilin, 4-{4'-[3''-(β-Sulfatoethylsulfonyl)-phenyl]-amino-6'-chlor-1',3',5'-triazin-2'-yl}-amino-anilin, 2-Sulfo-5-{4'-[4''-(β-sulfatoethylsulfonyl)-phenyl]-amino-6'-chlor-1',3',5'-triazin-2'-yl}-amino-anilin, 2-Sulfo-5-{4'-[3''-(β-sulfatoethylsulfonyl)-phenyl]-amino-6'-chlor-1',3',5'-triazin-2'-yl}-amino-anilin, 2-Sulfo-4-{4'-[4''-(β-sulfatoethylsulfonyl)-phenyl]-amino-6'-chlor-1',3',5'-triazin-2'-yl}-amino-anilin und 2-Sulfo-4-{4'-[3''-(β-sulfatoethylsulfonyl)-phenyl]-amino-6'-chlor-1',3',5'-triazin-2'-yl}-amino-anilin sowie beispielsweise deren Vinylsulfonyl-, β-Thiosulfatoethylsulfonyl- und β-Phosphatoethylsulfonyl-Derivate.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Materialien verwendet werden. Auch können die bei der Synthese der erfindungsgemäßen Verbindungen anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Verbindungen der Formel (1) lassen sich, gemäß der erfindungsgemäßen Anwendung, auf den genannten Substraten, insbesondere auf den genannten Fasermaterialien, nach den für wasserlösliche Farbstoffe, insbesondere faserreaktive Farbstoffe, bekannten Anwendungstechniken applizieren und fixieren, so beispielsweise, indem man die Monoazoverbindung der allgemeinen Formel (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe- und Fixierweisen sind sowohl in der Fachliteratur als auch in der Patentliteratur zahlreich beschrieben, wie beispielsweise in der Europäischen Patentanmeldungs-Veröffentlichung Nr. 0 181 585A.

Mit den Verbindungen (1) werden sowohl auf carbonamidgruppenhaltigen Materialien, wie insbesondere auf Wolle, als auch auf hydroxygruppenhaltigem Material, wie insbesondere Cellulosefasermaterial violette bis blaustichig rote Färbungen und Drucke mit hoher Farbausbeute und gutem Farbaufbau erhalten, wobei die brillante Nuance auch in tiefen Tönen erhalten bleibt. Die Färbungen und Drucke besitzen gute Echtheitseigenschaften, wie insbesondere gute Licht-und Naßechtheitseigenschaften, wovon die gute Schweißlichtechtheit hervorgehoben werden kann.

Von den Färbungen und Drucken auf carbonamidgruppenhaltigem Material, wie insbesondere auf Wolle, können die Licht- und Wasch- und Naßlichtechtheiten hervorgehoben werden, selbst wenn auf eine ansonsten übliche ammoniakalische Nachbehandlung der gefärbten Ware verzichtet wird. Mit anderen faserreaktiven Wollfarbstoffen zeigen sie eine gute Kombinierbarkeit, was ein egales Färben der Faser ermöglicht. Ebenso läßt sich Material aus Wollfasern unterschiedlicher Provenienz mit den erfindungsgemäßen Azoverbindungen egal färben, wobei gegebenenfalls zur Verbesserung des Egalisierverhaltens ein übliches Egalisierhilfsmittel, wie beispielsweise N-Methyltaurin zugesetzt werden kann.

Bevorzugt dienen die erfindungsgemäßen Azofarbstoffe zum Färben von Cellulosefasermaterialien. Von den hierauf erzielbaren guten Echtheitseigenschaften sind insbesondere die guten Waschechtheiten bei 60 bis 95 °C, auch in Gegenwart von Perboraten, die sauren und alkalischen Schweißlichtechtheiten, die Lichtechtheit der Färbung in mit Trinkwasser feuchtem Zustand, die guten Alkali-, Säure-, Wasser- und Seewasserechtheiten und die gute Säurelagerbeständigkeit ("acid fading") beim Lagern von feuchtem, säurehaltigem gefärbtem Material (s. deutsche Auslegeschritt Nr. 2 322 236, Spalte 4, Zeilen 35 bis 42) hervorzuheben.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium-oder Kaliumsalze hergestellt und isoliert und

in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.
Die im sichtbaren Bereich angegebenen Absorptionsmaxima ($\lambda_{max}$-Werte) wurden aus wäßriger Lösung der Alkalimetallsalze bestimmt.

Beispiel 1

151 Teile 2-Hydroxy-3-sulfo-5-($\beta$-sulfatoethylsulfonyl)-anilin werden bei 0 bis 5°C in 500 Teilen einer schwefelsauren wäßrigen Lösung bei einem pH-Wert unterhalb von 2 mittels 28 Teilen Natriumnitrit in üblicher Weise diazotiert. Anschließend wird überschüssige salpetrige Säure mittels Amidosulfonsäure zerstört, und mittels Natriumcarbonat wird ein pH-Wert von 4 bis 5 eingestellt und das Diazoniumsalz mit 76 Teilen 2-Hydroxy-naphthalin-6-carbonsäure unter Einhaltung eines pH-Wertes von 4 bis 5 gekuppelt. Nach Beendigung der Kupplungsreaktion gibt man 88 Teile Kupfersulfat-pentahydrat hinzu und führt die Umsetzung bei etwa 20°C durch.

Die erhaltene erfindungsgemäße Kupferkomplex-Azoverbindung wird aus der Syntheselösung in üblicher Weise durch Aussalzen mit Natriumchlorid oder durch Sprühtrocknung als Alkalimetallsalz (Natriumsalz) der Verbindung der Formel

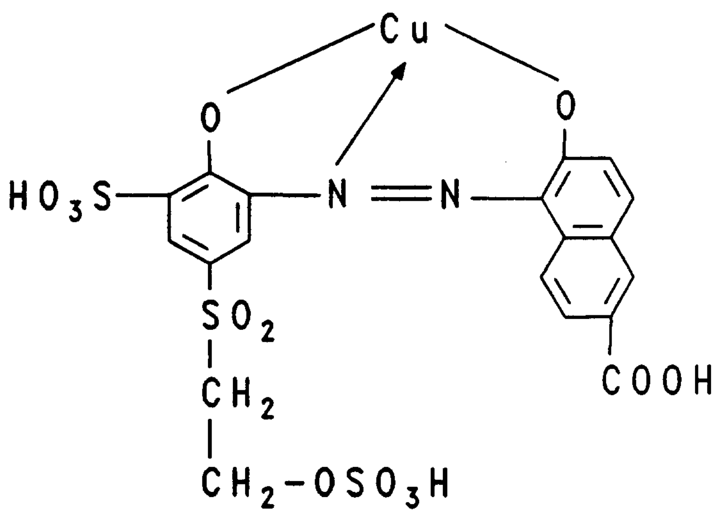

($\lambda_{max}$ = 521 nm)
isoliert. Sie besitzt sehr gute Farbstoffeigenschaften und färbt die in der Beschreibung genannten Materialien, insbesondere Cellulosefasermaterialien, wie Baumwolle, nach den für faserreaktive Farbstoffe üblichen Anwendungsverfahren in farbstarken roten Tönen. Die erfindungsgemäßen Färbungen besitzen sowohl im trockenen als auch im wasserfeuchten Zustand gute Lichtechtheitseigenschaften und des weiteren gute Schweißlicht- und Waschechtheiten.

Beispiel 2

24 Teile 2-Amino-8-($\beta$-sulfatoethylsulfonyl)-naphthalin-6-sulfonsäure werden in einer Lösung aus 1000 Teilen Wasser und 20 Teilen einer 31%igen wäßrigen Salzsäure unter Einhaltung eines pH-Wertes von unterhalb 2 bei -5°C mittels 12 Teilen einer wäßrigen 5n Natriumnitritlösung diazotiert. Überschüssige salpetrige Säure wird mit Amidosulfonsäure zerstört, und unter Einstellung und Einhaltung eines pH-Wertes zwischen 4 und 5 mittels Natriumcarbonat wird eine Lösung aus 11 Teilen des Natriumsalzes der 2-Hydroxy-naphthalin-6-carbonsäure in 150 Teilen Wasser unter kräftigem Rühren zu der Lösung des Diazoniumsalzes hinzugegeben. Nach Beendigung der Kupplungsreaktion wird der Ansatz mittels Natriumcarbonat auf einen pH-Wert von 6,6 gestellt, 12,5 Teile Kupfersulfat-dihydrat werden zugegeben und die Kupferungsreaktion bei 50 bis 60°C unter langsamer Zugabe von 34 Teilen einer 35%igen wäßrigen Wasserstoffperoxid-Lösung während drei Stunden durchgeführt. Danach isoliert man die erfindungsgemäße Kupferkomplex-Azoverbindung durch Aussalzen mit Natriumchlorid.

Man erhält ein violettes, elektrolythaltiges (natriumchloridhaltiges) Pulver der Natriumverbindung der Formel

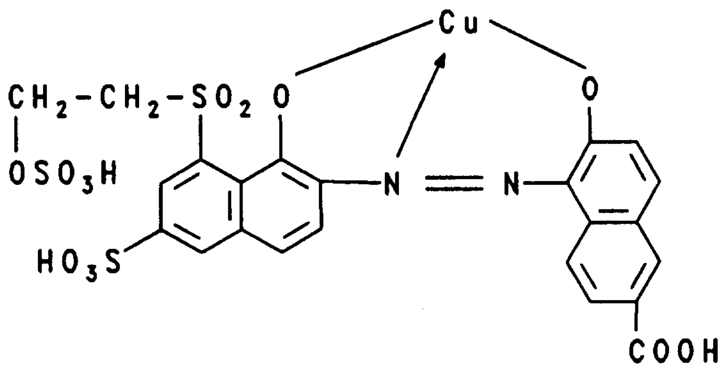

($\lambda_{max}$ = 553 nm)
die sehr gute Farbstoffeigenschaften zeigt und auf den in der Beschreibung genannten Fasermaterialien, beispielsweise Cellulosefasermaterialien, wie Baumwolle, nach den in der Technik für faserreaktive Farbstoffe üblichen Anwendungs- und Fixierverfahren farbstarke violette Färbungen und Drucke liefert, die gute Echtheitseigenschaften aufweisen, von denen insbesondere die guten Lichtechtheiten der Färbungen und Drucke in trockenen als auch im trinkwasserfeuchten Zustand und die guten Schweißlicht- und Waschechtheiten hervorgehoben werden können.

Beispiel 3

Eine Lösung mit einem pH-Wert von 4,5 von 65 Teilen 2,5-Dimethoxy-4-($\beta$-sulfatoethylsulfonyl)-anilin und 14 Teilen Natriumnitrit in 500 Teilen Wasser wird zur Diazotierung der Anilinverbindung bei 0 °C in üblicher Weise mit 70 Teilen einer konzentrierten wäßrigen Salzsäure versetzt. Überschüssige salpetrige Säure wird anschließend mit Amidosulfonsäure zerstört und eine Lösung aus 43 Teilen des Natriumsalzes der 2-Hydroxy-naphthalin-6-carbonsäure in 150 Teilen Wasser unter kräftigem Rühren unter Einhaltung eines pH-Wertes von 4 bis 5 hinzugegeben. Nach Beendigung der Kupplungsreaktion, die man bei etwa 15 °C unter Einhaltung des pH-Wertes zwischen 4 und 5 durchführt, gibt man 44 Teile Kupfersulfatpentahydrat hinzu und führt die entmethylierende Kupferungsreaktion während fünf Stunden bei Siedetemperatur (unter Rückfluß) durch. Der Ansatz wird anschließend mittels 5 Teilen Kieselgur geklärt und die erfindungsgemäße Kupferkomplex-Azoverbindung aus dem Filtrat durch Aussalzen mit Kaliumchlorid isoliert.

Man erhält 120 Teile eines roten elektrolythaltigen (natrium- und kaliumchloridhaltigen) Pulvers des Alkalimetallsalzes der Verbindung der Formel

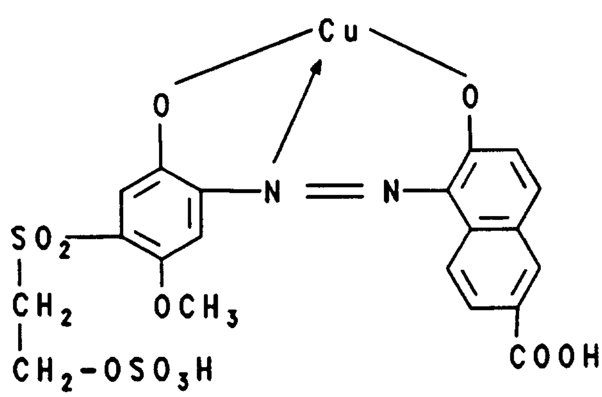

($\lambda_{max}$ = 521 nm).

Die erfindungsgemäße Kupferkomplex-Monoazoverbindung besitzt sehr gute Farbstoffeigenschaften und liefert nach den in der Technik üblichen Applikations- und Fixierverfahren farbstarke rote Färbungen

und Drucke mit guten Echtheiten, von denen insbesondere die guten Lichtechtheiten im trockenen und trinkwasserfeuchten Zustand der Färbungen und Drucke sowie deren guten Schweißlicht- und Waschechtheiten hervorgehoben werden können.

Beispiel 4

Man rührt 122,5 Teile 6-(β-Hydroxyethylsulfonyl)-benzoxazolon bei 95 °C in ein Gemisch aus 82 Teilen konzentrierter Schwefelsäure und 16 Teilen 65%igem Oleum ein und rührt das Gemisch etwa fünf Stunden bei 150 °C. Das gebildete 2-Hydroxy-4-(β-sulfatoethylsulfonyl)-anilin wird anschließend in üblicher Weise durch Zugabe von 24,2 Teilen Natriumnitrit zu diesem schwefelsauren Ansatz bei einem pH-Wert unterhalb 2 und einer Temperatur zwischen 0 und 5 °C diazotiert. Nach Beendigung der Diazotierungsreaktion wird überschüssige salpetrige Säure durch Amidosulfonsäure zerstört, und der Ansatz wird mit einer wäßrigen Lösung mit einem pH-Wert von 7 von 64 Teilen 2-Hydroxy-naphthalin-5-carbonsäure versetzt; die Kupplungsreaktion erfolgt bei einem pH-Wert zwischen 4 und 5 und bei einer Temperatur von etwa 15 °C. Nach Beendigung der Kupplungsreaktion gibt man 19 Teile Kupfersulfat-pentahydrat hinzu und führt die Kupferungsreaktion bei 20 °C und einem pH-Wert zwischen 6 und 7 durch.

Man isoliert die erfindungsgemäße Kupferkomplex-Azoverbindung auf üblichem Wege, beispielsweise durch Aussalzen mit Natriumchlorid oder durch Sprühtrocknung, als Alkalimetallsalz (Natriumsalz). Sie besitzt, in Form der freien Säure geschrieben, die Formel

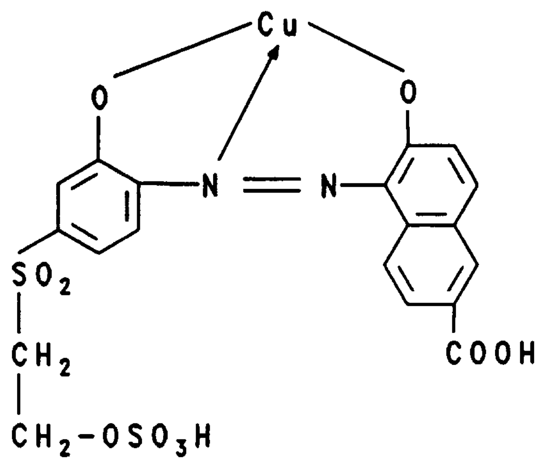

($\lambda_{max}$ = 514 nm)
und färbt die in der Beschreibung genannten Fasermaterialien, insbesondere Baumwolle, nach den in der Technik für fasereaktive Farbstoffe üblichen Applikations- und Fixierverfahren in farbstarken roten Tönen mit guten Echtheitseigenschaften, von denen insbesondere die gute Lichtechtheit im trockenen als auch im wasserfeuchten Zustand der Färbungen und Drucke sowie die guten Schweißlicht- und Waschechtheiten hervorgehoben werden können.

Beispiel 5

28,2 Teile 3-(β-Sulfatoethylsulfonyl)-anilin werden in 500 Teilen Wasser mit Lithiumcarbonat bei einem pH-Wert von 4 gelöst. Die Lösung wird durch Filtration geklärt und mit 20 Teilen einer wäßrigen 5n-Natriumnitritlösung versetzt. Die Anilinverbindung wird in üblicher Weise durch Zugabe von 150 Teilen einer wäßrigen 2n-Salzsäure bei einem pH-Wert unterhalb von 2 und einer Temperatur zwischen 0 und 5 °C diazotiert. Überschüssiges Nitrit wird anschließend mit Amidosulfonsäure zerstört. Man gibt sodann bei etwa 15 °C unter starkem Rühren eine Lösung von 20 Teilen des Lithiumsalzes der 2-Hydroxy-naphthalin-5-carbonsäure in 150 Teilen Wasser hinzu und hält hierbei den pH-Wert mittels Lithiumcarbonat zwischen 4 und 5. Nach Beendigung der Kupplungsreaktion stellt man den pH-Wert des Ansatzes mittels Lithiumcarbonat auf 6,6, gibt 25 Teile Kupfersulfat-dihydrat hinzu und führt die oxidative Kupferungsreaktion durch langsame Zugabe von 70 Teilen einer 35%igen wäßrigen Wasserstoffperoxidlösung während vier Stunden bei einer Temperatur zwischen 50 und 60 °C durch. Die gebildete erfindungsgemäße Kupferkomplex-Azoverbindung wird mittels Lithiumchlorid ausgesalzen und isoliert.

Man erhält ein violettes elektrolythaltiges Pulver des Alkalimetallsalzes (vorwiegend Lithiumsalzes) der Verbindung der Formel

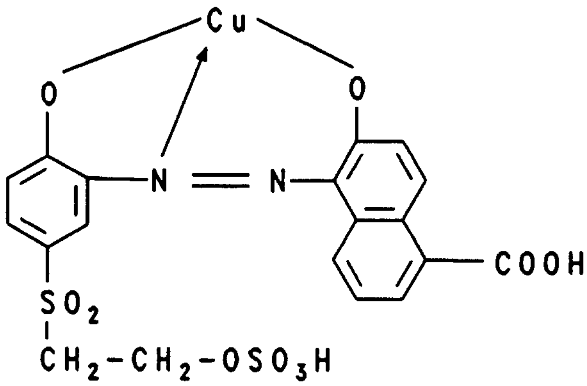

($\lambda_{max}$ = 515 nm)
die sehr gute faserreaktive Farbstoffeigenschaften aufweist und die in der Beschreibung genannten Fasermaterialien, wie Wolle und insbesondere Cellulosefasermaterialien, in farbstarken violetten Tönen färbt. Die mit der erfindungsgemäßen Kupferkomplex-Azoverbindung erhaltenen Färbungen und Drucke zeigen gute Echtheitseigenschaften, von denen insbesondere die guten Lichtechtheiten der Färbungen und Drucke sowohl im trockenen als auch wasserfeuchtem Zustand und die guten Schweißlicht- und Waschechtheiten hervorgehoben werden können.

Beispiele 6 bis 51

In den nachfolgenden Tabellenbeispielen sind weitere erfindungsgemäße Kupferkomplex-Monoazoverbindungen entsprechend der allgemeinen Formel (1) anhand des Restes -O-D- und der Stellung der Carboxygruppe in dem Rest der 2-Hydroxy-naphthalin-carbonsäure-Kupplungskomponente beschrieben. Sie lassen sich in erfindungsgemäßer Weise durch Kupferungsreaktion der Ausgangs-Monoazoverbindung entsprechend der allgemeinen Formel (4), beispielsweise nach einem der obigen Ausführungsbeispiele, herstellen (in den Tabellenbeispielen ist die jeweilige Ausgangs-Monoazoverbindung, die je nach Substituenten $R^4$ der Diazokomponente $D^1$ durch "normale", oxidative oder entmethylierende Kupferungsreaktion in die erfindungsgemäße Kupferkomplex-Monoazoverbindung der Formel (1) übergeführt wird, durch die Angabe des Restes -$R^4$-D- charakterisiert). Die in den Tabellenbeispielen aufgeführten erfindungsgemäßen Kupferkomplex-Monoazoverbindungen besitzen faserreaktive Farbstoffeigenschaften und liefern auf den in der Beschreibung genannten Materialien, wie Wolle und insbesondere Cellulosefasermaterialien, farbstarke Färbungen und Drucke mit guten Echtheitseigenschaften in dem für das jeweilige Tabellenbeispiel angegebenen Farbton (hier auf Baumwolle).

| Bsp. | Kupferkomplex-Monoazoverbindung (1) Rest -O-D- | Stellung von -COOM | Rest D($R^4$)- in Ausgangsverbindung (4) | Farbton |
|---|---|---|---|---|
| 6 | 2-Oxy-4-(ß-sulfatoethyl-sulfonyl)-phenyl | 5- | 2-Hydroxy-4-(ß-sulfatoethylsulfonyl)-phenyl | rotviolett (528) |
| 7 | dito | 6- | dito | dito |
| 8 | 2-Oxy-3-sulfo-5-(ß-sulfatoethylsulfonyl)-phenyl | 5- | 2-Hydroxy-3-sulfo-5-(ß-sulfatoethylsulfonyl)-phenyl | rotstichig violett (524) |
| 9 | 2-Oxy-6-sulfo-4-vinylsulfonyl-phenyl | 6- | 2-Sulfo-4-vinylsulfonyl-phenyl | rotstichig violett (522) |
| 10 | 2-Oxy-3-(ß-thiosulfatoethyl-sulfonyl)-phenyl | 6- | 3-(ß-Thiosulfatoethyl-sulfonyl)-phenyl | rot (510) |
| 11 | 2-Oxy-6-sulfo-3-vinylsulfonyl-phenyl | 6- | 2-Sulfo-5-vinylsulfonyl-phenyl | rot |
| 12 | 2-Oxy-4-(ß-thiosulfatoethyl-sulfonyl)-phenyl | 6- | 4-(ß-Thiosulfatoethyl-sulfonyl)-phenyl | rot (510) |

| Bsp. | Kupferkomplex-Monoazoverbindung (1) | | Rest $D(R^4)$- in Ausgangsverbindung (4) | Farbton |
|---|---|---|---|---|
| | Rest -O-D- | Stellung von -COOM | | |
| 13 | 2-Oxy-6-sulfo-4-(ß-sulfato-ethylsulfonyl)-phenyl | 6- | 2-Sulfo-4-(ß-sulfato-ethylsulfonyl)-phenyl | rotstichig violett (522) |
| 14 | 2-Oxy-5-(ß-sulfatoethyl-sulfonyl)-phenyl | 6- | 3-(ß-Sulfatoethyl-sulfonyl)-phenyl | rot (510) |
| 15 | 2-Oxy-6-sulfo-3-(ß-sulfato-ethylsulfonyl)-phenyl | 6- | 2-Sulfo-5-(ß-sulfato-ethylsulfonyl)-phenyl | rot |
| 16 | 2-Oxy-4-methyl-5-(ß-sulfatoethyl-sulfonyl)-phenyl | 6- | 4-Methyl-3-(ß-sulfatoethyl-sulfonyl)-phenyl | rot |
| 17 | 2-Oxy-5-methyl-4-(ß-sulfatoethyl-sulfonyl)-phenyl | 5- | 2-Methoxy-5-methyl-4-(ß-sulfatoethyl-sulfonyl)-phenyl | rotstichig violett |
| 18 | 2-Oxy-4-[3'-(ß-sulfatoethylsulfonyl)-phenylamidocarbonyl]-phenyl | 6- | 4-[3'-(ß-Sulfatoethylsulfonyl)-phenylamidocarbonyl]-phenyl | rot |

| Bsp. | Kupferkomplex-Monoazoverbindung (1) | | Rest $D(R^4)$- in Ausgangsverbindung (4) | Farbton |
|---|---|---|---|---|
| | Rest -O-D- | Stellung von -COOM | | |
| 19 | 2-Oxy-4-(ß-sulfatoethylamino)-5-(ß-sulfatoethylsulfonyl)-phenyl | 6- | 4-(ß-Sulfatoethylamino)-3-(ß-sulfatoethylsulfonyl)-phenyl | rot |
| 20 | 2-Oxy-4-(ß-sulfatoethoxy)-5-(ß-sulfatoethylsulfonyl)-phenyl | 6- | 4-(ß-Sulfatoethoxy)-3-(ß-sulfatoethylsulfonyl)-phenyl | rot |
| 21 | 1-Oxy-6-(ß-sulfatoethylsulfonyl)-naphth-2-yl | 6- | 6-(ß-Sulfatoethylsulfonyl)-naphth-2-yl | rotstichig violett (494) |
| 22 | 1-Oxy-8-sulfo-6-(ß-sulfatoethyl-sulfonyl)-naphth-2-yl | 6- | 8-Sulfo-6-(ß-sulfatoethyl-sulfonyl)-naphth-2-yl | rotstichig violett (495) |
| 23 | 1-Oxy-7-sulfo-5-(ß-sulfatoethyl-sulfonyl)-naphth-2-yl | 6- | 7-Sulfo-5-(ß-sulfatoethyl-sulfonyl)-naphth-2-yl | violett |
| 24 | 1-Oxy-6-sulfo-8-(ß-sulfatoethyl-sulfonyl)-naphth-2-yl | 6- | 6-Sulfo-8-(ß-sulfatoethyl-sulfonyl)-naphth-2-yl | violett |

| Bsp. | Kupferkomplex-Monoazoverbindung (1) | | Rest $D(R^4)$- in Ausgangsverbindung (4) | Farbton |
|---|---|---|---|---|
| | Rest -O-D- | Stellung von -COOM | | |
| 25 | 1-Oxy-8-(ß-sulfatoethyl-sulfonyl)-naphth-2-yl | 6- | 8-(ß-Sulfatoethylsulfonyl)-naphth-2-yl | violett |
| 26 | 2-Oxy-4,5-di-(ß-sulfatoethyl-sulfonyl)-phenyl | 6- | 3,4-Di-(ß-sulfatoethylsulfonyl)-phenyl | rot |
| 27 | 1-Oxy-5-sulfo-7-(ß-sulfatoethyl-sulfonyl)-naphth-2-yl | 6- | 5-Sulfo-7-(ß-sulfatoethyl-sulfonyl)-naphth-2-yl | violett |
| 28 | 2-Oxy-5-(ß-sulfatoethylsulfonyl)-phenyl | 5- | 2-Methoxy-5-(ß-sulfatoethyl-sulfonyl)-phenyl | rotstichig violett |
| 29 | 2-Oxy-6-sulfo-4-(ß-sulfatoethyl-sulfonyl)-phenyl | 5- | 2-Sulfo-4-(ß-sulfatoethyl-sulfonyl)-phenyl | rotstichig violett |
| 30 | 2-Oxy-5-(ß-sulfatoethylsulfonyl)-phenyl | 5- | 3-(ß-Sulfatoethylsulfonyl)-phenyl | rotstichig violett |

| Bsp. | Kupferkomplex-Monoazoverbindung (1) Rest -O-D- | Stellung von -COOM | Rest D($R^4$)- in Ausgangsverbindung (4) | Farbton |
|---|---|---|---|---|
| 31 | 2-Oxy-6-sulfo-3-(ß-sulfatoethyl-sulfonyl)-phenyl | 5- | 2-Sulfo-5-(ß-sulfatoethyl-sulfonyl)-phenyl | rot |
| 32 | 2-Oxy-4-methyl-5-(ß-sulfatoethyl-sulfonyl)-phenyl | 5- | 2-Methyl-3-(ß-sulfatoethyl-sulfonyl)-phenyl | rotstichig violett |
| 33 | 2-Oxy-4-{4'-[γ-(β'-sulfatoethyl-sulfonyl)-propyl]-amino-6'-fluor-1',3',5'-triazin-2'-yl}-amino-phenyl | 6- | 4-{4'-[γ-(β'-Sulfatoethylsulfonyl)-propyl]-amino-6'-fluor-1',3',5'-triazin-2'-yl}-amino-phenyl | rotstichig violett |
| 34 | 2-Oxy-6-sulfo-3-{4'-[γ-(β'-sulfato-ethylsulfonyl)-propyl]-amino-6'-fluor-1',3',5'-triazin-2'-yl}-amino-phenyl | 6- | 2-Sulfo-5-{4'-[γ-(β'-sulfatoethylsulfonyl)-propyl]-amino-6'-fluor-1',3',5'-triazin-2'-yl}-amino-phenyl | rotstichig violett |

| Bsp. | Kupferkomplex-Monoazoverbindung (1) Rest -O-D- | Stellung von -COOM | Rest D($R^4$)- in Ausgangsverbindung (4) | Farbton |
|---|---|---|---|---|
| 35 | 2-Oxy-4-{4'-[4"-(β-sulfatoethyl-sulfonyl)-phenyl]-amino-6'-cyano-amino-1',3',5'-triazin-2'-yl}-amino-phenyl | 6- | 4-{4'-[4"-(β-Sulfatoethyl-sulfonyl)-phenyl]-amino-6'-cyano-amino-1',3',5'-triazin-2'-yl}-amino-phenyl | rotstichig violett |
| 36 | 2-Oxy-4-{4'-[3"-(β-sulfatoethyl-sulfonyl)-phenyl]-amino-6'-cyano-amino-1',3',5'-triazin-2'-yl}-amino-phenyl | 6- | 4-{4'-[3"-(β-Sulfatoethyl-sulfonyl)-phenyl]-amino-6'-cyano-amino-1',3',5'-triazin-2'-yl}-amino-phenyl | rotstichig violett |
| 37 | 2-Oxy-6-sulfo-3-{4'-[4"-(β-sulfato-ethylsulfonyl)-phenyl]-amino-6'-cyano-amino-1',3',5'-triazin-2'-yl}-amino-phenyl | 6- | 2-Sulfo-5-{4'-[4"-(β-sulfato-ethylsulfonyl)-phenyl]-amino-6'-cyano-amino-1',3',5'-triazin-2'-yl}-amino-phenyl | rotstichig violett |

| Bsp. | Kupferkomplex-Monoazoverbindung (1) | | Rest $D(R^4)$- in Ausgangsverbindung (4) | Farbton |
|---|---|---|---|---|
| | Rest -O-D- | Stellung von -COOM | | |
| 38 | 2-Oxy-6-sulfo-3-{4'-[3"-(β-sulfato-ethylsulfonyl)-phenyl]-amino-6'-cyano-amino-1',3',5'-triazin-2'-yl}-amino-phenyl | 6- | 2-Sulfo-5-{4'-[3"-(β-sulfato-ethylsulfonyl)-phenyl]-amino-6'-cyano-amino-1',3',5'-triazin-2'-yl}-amino-phenyl | rotstichig violett |
| 39 | 2-Oxy-6-sulfo-4-{4'-[4"-(β-sulfato-ethylsulfonyl)-phenyl]-amino-6'-cyano-amino-1',3',5'-triazin-2'-yl}-amino-phenyl | 6- | 2-Sulfo-4-{4'-[4"-(β-sulfato-ethylsulfonyl)-phenyl]-amino-6'-cyano-amino-1',3',5'-triazin-2'-yl}-amino-phenyl | rotstichig violett |
| 40 | 2-Oxy-6-sulfo-4-{4'-[3"-(β-sulfato-ethylsulfonyl)-phenyl]-amino-6'-cyano-amino-1',3',5'-triazin-2'-yl}-amino-phenyl | 6- | 2-Sulfo-4-{4'-[3"-(β-sulfato-ethylsulfonyl)-phenyl]-amino-6'-cyano-amino-1',3',5'-triazin-2'-yl}-amino-phenyl | rotstichig violett |

| Bsp. | Kupferkomplex-Monoazoverbindung (1) Rest -O-D- | Stellung von -COOM | Rest D($R^4$)- in Ausgangsverbindung (4) | Farbton |
|---|---|---|---|---|
| 41 | 2-Oxy-4-{4'-[4"-(β-sulfatoethylsulfonyl)-phenyl]-amino-6'-chlor-1',3',5'-triazin-2'-yl}-amino-phenyl | 6- | 4-{4'-[4"-(β-Sulfatoethylsulfonyl)-phenyl]-amino-6'-chlor-1',3',5'-triazin-2'-yl}-amino-phenyl | rotstichig violett |
| 42 | 2-Oxy-4-{4'-[3"-(β-sulfatoethylsulfonyl)-phenyl]-amino-6'-chlor-1',3',5'-triazin-2'-yl}-amino-phenyl | 6- | 4-{4'-[3"-(β-Sulfatoethylsulfonyl)-phenyl]-amino-6'-chlor-1',3',5'-triazin-2'-yl}-amino-phenyl | rotstichig violett |
| 43 | 2-Oxy-6-sulfo-3-{4'-[4"-(β-sulfato-ethylsulfonyl)-phenyl]-amino-6'-chlor-1',3',5'-triazin-2'-yl}-amino-phenyl | 6- | 2-Sulfo-5-{4'-[4"-(β-sulfatoethylsulfonyl)-phenyl]-amino-6'-chlor-1',3',5'-triazin-2'-yl}-amino-phenyl | rotstichig violett |

| Bsp. | Kupferkomplex-Monoazoverbindung (1) Rest -O-D- | Stellung von -COOM | Rest D($R^4$)- in Ausgangsverbindung (4) | Farbton |
|---|---|---|---|---|
| 44 | 2-Oxy-6-sulfo-3-{4'-[3"-(β-sulfato-ethylsulfonyl)-phenyl]-amino-6'-chlor-1',3',5'-triazin-2'-yl}-amino-phenyl | 6- | 2-Sulfo-5-{4'-[3"-(β-sulfatoethylsulfonyl)-phenyl]-amino-6'-chlor-1',3',5'-triazin-2'-yl}-amino-phenyl | rotstichig violett |
| 45 | 2-Oxy-6-sulfo-4-{4'-[4"-(β-sulfatoethylsulfonyl)-phenyl]-amino-6'-chlor-1',3',5'-triazin-2'-yl}-amino-phenyl | 6- | 2-Sulfo-4-{4'-[4"-(β-sulfatoethylsulfonyl)-phenyl]-amino-6'-chlor-1',3',5'-triazin-2'-yl}-amino-phenyl | rotstichig violett |
| 46 | 2-Oxy-6-sulfo-4-{4'-[3"-(β-sulfatoethylsulfonyl)-phenyl]-amino-6'-chlor-1',3',5'-triazin-2'-yl}-amino-phenyl | 6- | 2-Sulfo-4-{4'-[3"-(β-sulfatoethylsulfonyl)-phenyl]-amino-6'-chlor-1',3',5'-triazin-2'-yl}-amino-phenyl | rotstichig violett |
| 47 | 2-Oxy-5-(β-sulfatoethylsulfonyl)-phenyl | 6- | 2-Methoxy-5-(β-sulfatoethyl-sulfonyl)-phenyl | rotstichig violett |

| Bsp. | Kupferkomplex-Monoazoverbindung (1) | | Rest $D(R^4)$- in Ausgangsverbindung (4) | Farbton |
|---|---|---|---|---|
| | Rest -O-D- | Stellung von -COOM | | |
| 48 | 2-Oxy-5-methyl-4-(β-sulfatoethyl-sulfonyl)-phenyl | 6- | 2-Methoxy-5-methyl-4-(β-sulfatoethyl-sulfonyl)-phenyl | rot |
| 49 | 2-Oxy-5-methoxy-4-(β-sulfatoethyl-sulfonyl)-phenyl | 5- | 2,5-Dimethoxy-4-(β-sulfato-ethylsulfonyl)-phenyl | rot |
| 50 | 2-Oxy-4-(β-sulfatoethylsulfonyl)-phenyl | 6- | 2-Methoxy-4-(β-sulfatoethyl-sulfonyl)-phenyl | rotstichig violett |
| 51 | dito | 5- | dito | rot |

## Patentansprüche

1. Kupferkomplex-Monoazoverbindung der allgemeinen Formel (1)

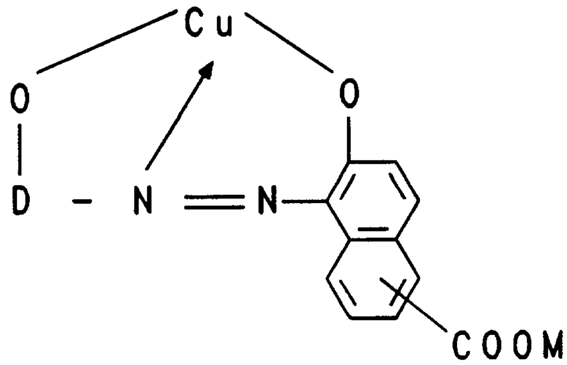

(1)

in welcher bedeuten:

M ist ein Wasserstoffatom oder ein Alkalimetall;

D ist eine Gruppe der allgemeinen Formel (2a), (2b) oder (2c)

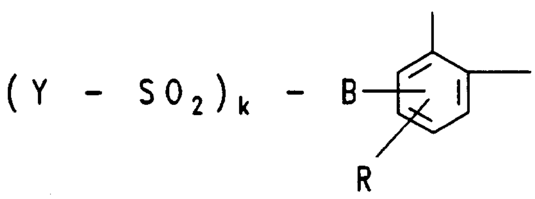

(2a)

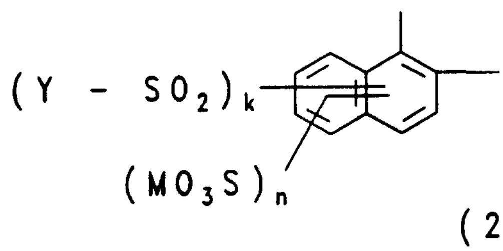

(2b)

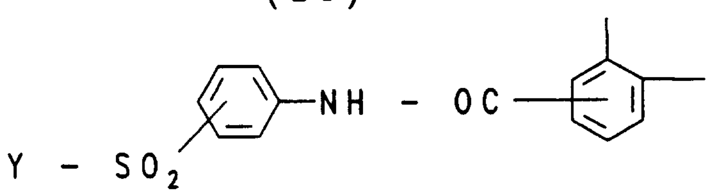

(2c)

in welchen

R Wasserstoff, Alkyl von 1 bis 4 C-Atomen, durch Sulfo, Carboxy oder Sulfato substituiertes Alkyl von 1 bis 4 C-Atomen, Alkoxy von 1 bis 4 C-Atomen, durch Sulfo, Carboxy oder Sulfato substituiertes Alkoxy von 1 bis 4 C-Atomen, Sulfo, Halogen oder eine Gruppe der allgemeinen Formel (3a)

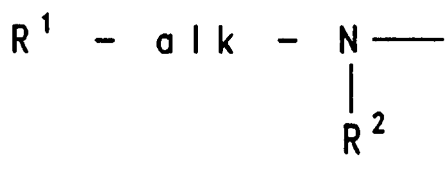

(3a)

ist, in welcher

alk Alkylen von 2 bis 4 C-Atomen ist,

$R^1$ Sulfo, Carboxy, Sulfato oder Phosphato und

$R^2$ Wasserstoff, Methyl oder Ethyl ist,

Y für Vinyl steht oder Ethyl ist, das in $\beta$-Stellung einen durch Alkali unter Bildung der Vinylgruppe eliminierbaren Substituenten enthält,

k die Zahl 1 oder 2 bedeutet,

n für die Zahl Null oder 1 steht (wobei im Falle n gleich Null diese Gruppe Wasserstoff bedeutet),

M eine der oben genannten Bedeutungen besitzt, und

B eine direkte Bindung ist oder eine bivalente Gruppe der allgemeinen Formel (3b)

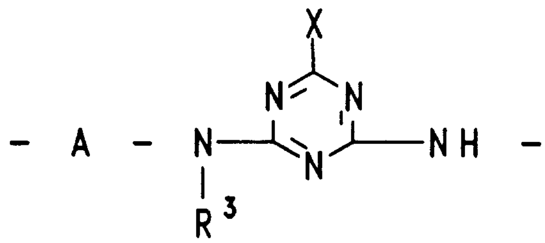

(3b)

bedeutet, in welcher

A Alkylen von 2 bis 4 C-Atomen oder gegebenenfalls substituiertes Arylen ist,

$R^3$ Wasserstoff oder Alkyl von 1 bis 4 C-Atomen ist und

X Halogen, Cyanoamino oder Hydroxy bedeutet;

in Formel (2b) steht die Oxigruppe in 2-Stellung und die Azogruppe in 1-Stellung oder die Oxigruppe in 1-Stellung und die Azogruppe in 2-Stellung an den Naphthalinrest gebunden.

**2.** Verbindung nach Anspruch 1, dadurch gekennzeichnet, daß R Wasserstoff, Methoxy oder Sulfo bedeutet.

**3.** Verbindung nach Anspruch 1 oder 2, dadurch gekennzeichnet, daß Y β-Sulfatoethyl ist.

**4.** Verbindung nach Anspruch 1, dadurch gekennzeichnet, daß der Rest -O-D- 2-Oxy-4-(β-sulfatoethylsulfonyl)-phenyl ist.

**5.** Verbindung nach Anspruch 1, dadurch gekennzeichnet, daß der Rest -O-D- 2-Oxy-5-(β-sulfatoethylsulfonyl)-phenyl ist.

**6.** Verbindung nach Anspruch 1, dadurch gekennzeichnet, daß der Rest -O-D- 2-Oxy-6-sulfo-8-(β-sulfatoethylsulfonyl)-naphth-2-yl ist.

**7.** Gemisch von zwei Kupferkomplex-Monoazoverbindungen der allgemeinen Formel (1), worin D und M und die Stellung der Gruppe -COOM gleiche Bedeutungen haben und in der einen Verbindung der Rest Y für β-Thiosulfatoethyl und in der anderen Verbindung der Rest Y für Vinyl steht.

**8.** Gemisch von zwei Kupferkomplex-Monoazoverbindungen der allgemeinen Formel (1), worin D und M und die Stellung der Gruppe -COOM gleiche Bedeutungen haben und in der einen Verbindung der Rest Y für β-Sulfatoethyl und in der anderen Verbindung der Rext Y für Vinyl steht.

**9.** Wäßrige Präparation, enthaltend 5 bis 50 Gew.-% eines Gemisches von Anspruch 7 oder 8.

**10.** Verfahren zur Herstellung einer Verbindung von Anspruch 1, dadurch gekennzeichnet, daß man eine Verbindung der allgemeinen Formel (4)

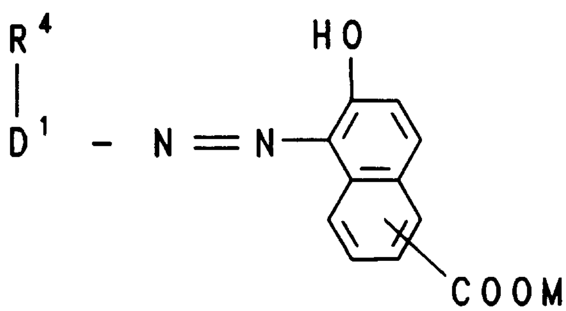

(4)

in welcher

M die in Anspruch 1 genannte Bedeutung hat,

$D^1$ einen Rest der allgemeinen Formel (5a), (5b) oder (5c)

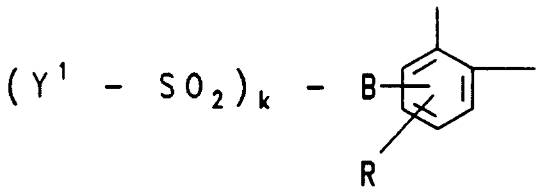

(5a)

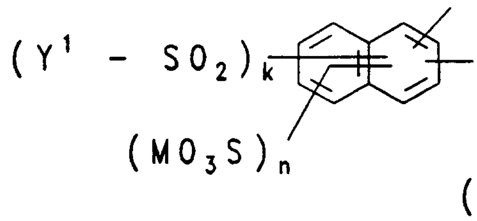

(5b)

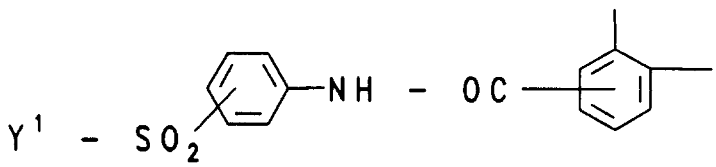

(5c)

bedeutet, in welchen B, R, M, k und n die in Anspruch 1 genannten Bedeutungen haben, $Y^1$ eine der für Y in Anspruch 1 genannten Bedeutungen besitzt oder β-Hydroxyethyl ist und $R^4$ für Wasserstoff, Hydroxy oder Methoxy steht, wobei in Formel (5b) die freie Bindung zur Azogruppe in ortho-Stellung zu $R^4$ steht,

mit einer ein Kupferion abgebenden Verbindung bei einem pH-Wert zwischen 4 und 7 umsetzt, wobei man im Falle von $R^4$ gleich Hydroxy die Umsetzung bei einer Temperatur zwischen 0 und 40 °C, im Falle von $R^4$ gleich Wasserstoff in Gegenwart eines oxidierenden Mittels bei einer Temperatur zwischen 10 und 60 °C und im Falle von $R^4$ gleich Methoxy bei einer Temperatur zwischen 80 und 120 °C durchführt, und daß man im Falle, daß $Y^1$ β-Hydroxyethyl ist, die gebildete Kupferkomplex-Monoazoverbindung mit der β-Hydroxyethylsulfonyl-Gruppe mit Hilfe eines Acylierungs- oder Veresterungsmittels in eine Kupferkomplex-Monoazoverbindungder allgemeinen Formel (1) mit Y gleich einer Ethylgruppe, die in β-Stellung einen anorganischen oder organischen Esterrest enthält, überführt.

**11.** Verwendung einer Verbindung von Anspruch 1 oder eines Gemisches gemäß Anspruch 8 oder 9 oder einer Präparation gemäß Anspruch 10 zum Färben oder Bedrucken von hydroxy- und/oder carbonamidgruppenhaltigem Material, insbesondere Fasermaterial.

**12.** Verfahren zum Färben oder Bedrucken von hydroxy- und/oder carbonamidgruppenhaltigem Material, dadurch gekennzeichnet, daß man in wäßrigem Medium eine Verbindung der allgemeinen Formel (1) von Anspruch 1 oder ein Gemisch gemäß Anspruch 8 oder 9 oder eine Präparation gemäß Anspruch 10 auf das Material aufbringt und den oder die Verbindungen der allgemeinen Formel (1) auf dem Material mittels Wärme oder mit Hilfe eines alkalisch wirkenden Mittels oder mittels beider Maßnahmen fixiert.

Europäisches Patentamt

# EUROPÄISCHER RECHERCHENBERICHT

Nummer der Anmeldung
EP 94 10 3418

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| Y | EP-A-0 292 955 (HOECHST AG.)<br>* Seite 6, Zeile 37 - Zeile 55; Ansprüche; Beispiele * | 1-12 | C09B62/515<br>C09B62/44<br>C09B67/22<br>C09B67/44<br>//C09B67/26 |
| D | & US-A-5 093 483 (H.SPRINGER ET AL.)<br>--- | | |
| Y | EP-A-0 324 372 (HOECHST AG.)<br>* Seite 8, Zeile 21 - Zeile 37; Ansprüche; Beispiele *<br>--- | 1-3,7-12 | |
| Y | CH-A-370 508 (FARBWERKE HOECHST AG. VORMALS MEISTER LUCIUS & BRÜNING)<br>* Seite 1, Zeile 1 - Zeile 11; Beispiel 58 *<br>* Seite 1, Zeile 37 - Zeile 40 *<br>----- | 1-12 | |

RECHERCHIERTE SACHGEBIETE (Int.Cl.5)

C09B

Der vorliegende Recherchenbericht wurde für alle Patentansprüche erstellt

| Recherchenort | Abschlußdatum der Recherche | Prüfer |
|---|---|---|
| DEN HAAG | 22. Juni 1994 | Ginoux, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument